# FASCICULE DE BREVET EUROPEEN

(11) **EP 3 770 233 B1**
(45) Date de publication et mention de la délivrance du brevet: **28.01.2026**
(21) Numéro de dépôt: 20187632.3
(22) Date de dépôt: 24.07.2020
(51) Int. Cl.: C09K 11/02, C09K 11/77, C09D 5/22, C09B 67/42, C09C 1/00

(54) **COMPOSITION LUMINESCENTE, COMPOSITION LUMINESCENTE COLOREE, METHODE DE PREPARATION ET APPLICATIONS**
LEUCHTZUSAMMENSETZUNG, FARBIGE LEUCHTZUSAMMENSETZUNG, HERSTELLUNGSVERFAHREN UND ANWENDUNGEN
LUMINESCENT COMPOSITION, COLOURED LUMINESCENT COMPOSITION, METHOD FOR PREPARING SAME AND USES THEREOF

(30) Priorité: 26.07.2019 FR 1908567
(43) Date de publication de la demande: 27.01.2021
(73) Titulaire: Sacre, 75003 Paris (FR); Somefyn, 77380 Combs-la-Ville (FR)
(72) Inventeur: PALAZZOLO, Rocco, 75003 PARIS (FR); MEJLADI, Moktar, 45120 CEPOY (FR)
(74) Mandataire: Atout PI Laplace

(56) Documents cités:
- EP-A1- 1 279 716
- CN-A- 107 226 919
- US-A1- 2003 222 247

## Description

### Domaine technique de l'invention

L'invention se situe dans le domaine des compositions comprenant des pigments luminescents et pouvant être colorées. L'invention concerne une composition luminescente, des méthodes de préparation et des applications de cette composition luminescente. L'invention concerne également une composition luminescente colorée obtenue par une méthode de préparation comprenant une étape de saturation d'un pigment luminescent avec une composition de saturation, une étape de mélange du pigment luminescent saturé avec une composition vectrice et une étape de mélange de la composition luminescente saturée avec une composition colorante.

### Etat de la technique

Dans le domaine des pigments luminescents et en particulier dans le domaine des compositions luminescentes et colorées, il a toujours été recherché une amélioration de l'intensité de luminescence et une amélioration de la rémanence de la luminescence par faible luminosité. Plus précisément, la réduction de la perte de l'intensité lumineuse par faible luminosité et une rémanence de la luminescence de plus en plus importante, i.e. supérieure à 15 heures, constitue les principaux objectifs. En effet, de nombreuses normes exigent des intensités et des rémanences de luminescence de plus en plus grandes (NF X08-050-1-2-3, DIN 67510, normes RS6-1A et RS6-1, normes de l'International Maritime Organization, norme ISO Low-Location Lighting, norme ISO 16069 et 15370) avec des exigences différentes en milieu urbain, en intérieur et en laboratoire.

En effet, les compositions luminescentes colorées peuvent être utilisées pour apporter une couleur de colorant lorsque la lumière est forte mais aussi pour apporter une visibilité lorsque la luminosité est basse grâce à la présence de pigments luminescents et ainsi contribuer à des économies d'énergie. De nombreuses applications nocturnes existent telles que la signalisation, la signalisation de sécurité pour le guidage ou la décoration d'objets ou de bâtiments. Par exemple, de telles compositions ont été intégrées dans des peintures ou des panneaux de signalisation et de sécurité, par exemple pour répondre aux obligations d'aide à l'évacuation des personnes dans les lieux publics.

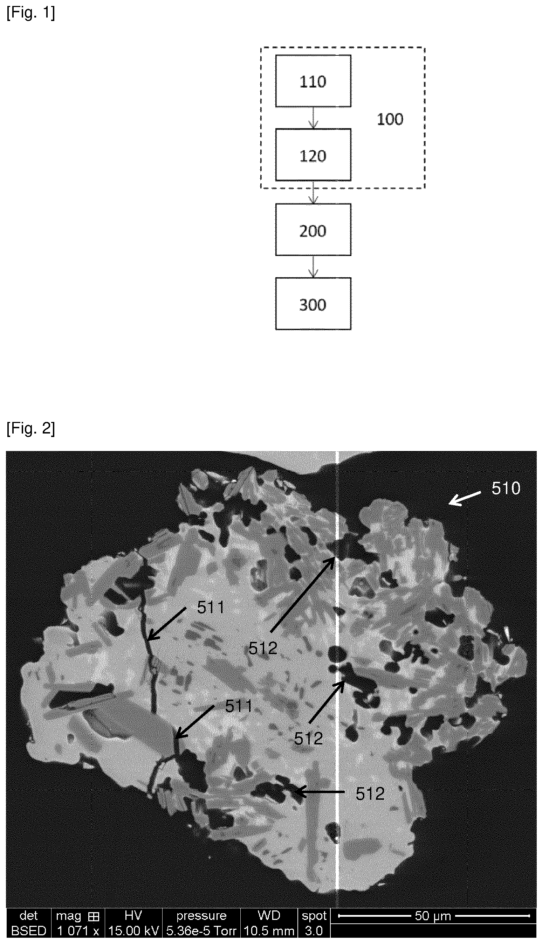

De telles compositions luminescentes colorées ont été développées par utilisation de colorants liquides ou en poudre à disperser pour colorer les compositions luminescentes. Les méthodes de l'art antérieur comprennent par exemple une première étape préalable de mélange d'un pigment luminescent avec un colorant ou bien d'un pigment luminescent avec un colorant dans une matrice. Cependant les compositions luminescentes colorées obtenues par de telles méthodes démontrent un handicap majeur en raison de l'absorption du colorant dans les porosités ou micro-cavités du pigment luminescent ou de l'air laissé dans les porosités ou micro-cavités du pigment luminescent. En effet, les pigments luminescents comprennent des porosités ou micro-cavités, telles que visibles sur les figures 2, 3, 4 et 5. Ces porosités ou micro-cavités peuvent correspondre à des fissures 511 ou bien des cavités 512. Ainsi, le colorant, finement broyé, est mélangé avec le pigment luminescent qui est sec et le pigment luminescent aura tendance à absorber le colorant dans ses porosités ou micro-cavités ou à être recouvert en surface par le colorant en laissant certaines porosités ou micro-cavités remplies d'air. Cette absorption du colorant dans les porosités ou micro-cavités du pigment luminescent a pour conséquence de rendre le pigment luminescent partiellement ou totalement opacifié, conduisant ainsi à une rémanence de luminescence de surface et ou de masse faible voire nulle.

En outre, les divers pigments luminescents développés, dont la taille est généralement de 5 à 1000 µm, sont tous très poreux et ont pour désavantage d'absorber directement l'humidité. L'absorption d'eau dans tous les environnements, que ce soit pour des utilisations extérieures au soleil, dans les milieux humides tels que des bassins ou des piscines ou dans des conditions de gel ou dégel, génère de nombreux problèmes de cristallisation qui détériorent progressivement les pigments luminescents, diminuant la rémanence de luminescence jusqu'à une inefficacité totale.

Le problème se présente également de manière accrue lorsque de tels pigments sont immergés dans un liant en phase aqueuse, ce qui a pour conséquence une absorption rapide de l'eau et une sédimentation importante. De manière parallèle, si le taux de pigments luminescents est augmenté, l'absorption de l'eau est accélérée et la réaction d'absorption est encore plus rapide.

Des méthodes de transformation plastique entre 160°C et 230°C ont été mises en œuvre afin d'injecter, extruder ou rotomouler des matières plastiques comprenant le pigment luminescent. Cependant de telles méthodes dégagent de la vapeur d'eau en raison d'une importante montée en température des matériaux présents, ce qui est absorbé par le pigment luminescent. De plus, de telles méthodes génèrent irrémédiablement des bulles d'air dans les matières obtenues par la méthode ainsi que des imperfections d'aspects. Ces défauts rendent le matériau microporeux en surface, permettant à l'eau de pénétrer le matériau et même de perforer celui-ci. De telles méthodes permettent de produire des matériaux comprenant des compositions luminescentes colorées mais dont la rémanence de luminescence de nuit n'est pas homogène et qui restent sensibles à l'humidité. Ces matériaux sont également sensibles aux abrasions. Par exemple, les bouées rotomoulées maritimes comprenant des compositions luminescentes coulent après 5 mois d'utilisation en mer.

De manière concomitante, les matériaux plastiques utilisés pour leur transformation avec des compositions luminescentes colorées sont sensibles à l'humidité, rendant difficile l'obtention de matériaux plastiques comprenant des compositions luminescentes colorées qui soient à la fois résistants mécaniquement, efficaces en terme de rémanence de luminescence et d'intensité de luminescence et enfin efficaces de manière durable dans le temps. De même, des essais d'étuvages ont été réalisés à des températures entre 80 et 200°C avec utilisation de ventilations. Cependant de tels essais ont démontré la génération de blocs cristallisés qui sont inutilisables et indiquent également une perte importante de pigments luminescents.

De solutions antérieures ont été développées avec pour objectif une pureté et une résistance du produit contenant les pigments photoluminescents.

Le document WO2009053391 présente l'association entre un pigment phosphorescent A dont la taille des particules est comprise entre 0,5 et 25 µm et un colorant B, dont la taille des particules est inférieure à 0,2 µm. Cependant, la rémanence de luminescence des matériaux obtenus par de telles méthodes n'est que de quelques secondes. De plus, ces méthodes requièrent une teneur élevée en colorant B, ce qui a pour conséquence de réduire l'efficacité du matériau obtenu. En effet, le colorant B absorbe la lumière servant à charger le pigment phosphorescent A ainsi que celle émise par le pigment A dans un environnement de faible luminosité.

D'autres solutions comprennent l'ajout d'un revêtement de surface, une cire de polyéthylène, qui recouvre une couche comprenant une composition luminescente colorée pour une utilisation en phase aqueuse. Cependant, de telles méthodes génèrent tout d'abord un assemblage de couche qui présente des problèmes de tenue mécanique. En effet, dès que la solution est en phase aqueuse, une abrasion, ou érosion ou lixiviation, s'opère et la fine pellicule de cire est progressivement séparée de la composition luminescente colorée. Les pigments luminescents affleurent alors la phase aqueuse et sont progressivement abrasés. Egalement, ces méthodes ne permettent pas de surmonter le problème d'oxydation progressive des pigments luminescents.

En outre, on peut également citer le document US 2003/222247 qui décrit un procédé de fabrication d'un produit luminescent présentant une couleur diurne et une couleur phosphorescente, la couleur phosphorescente présentant des caractéristiques de phosphorescence à long terme après absorption de l'énergie provenant de sources lumineuses. Au moins une résine et au moins un agent anti-sédimentation sont mélangés et combinés avec une pluralité de cristaux luminescents capables de briller dans l'obscurité après l'absorption de la lumière. Ce mélange est combiné avec des solvants, des colorants et des additifs pour produire un matériau luminescent ayant une couleur diurne différente de sa couleur phosphorescente.

Il existe donc un intérêt à produire une composition luminescente qui peut être colorée, qui n'est pas sensible à l'humidité et qui est stable face à l'abrasion ou l'érosion, notamment dans des milieux humides. Il est également recherché une composition luminescente qui peut être colorée et qui présente des qualités de rémanence de luminescence, de tenue face à l'exposition aux rayons ultraviolets et d'intensité lumineuse qui sont affectées de manière négligeable dans le temps.

Des méthodes de production de telles compositions luminescentes pouvant être colorées sont ainsi également recherchées. De telles méthodes ont pour objectif de permettre aux pigments luminescents de ne pas être affectés par l'humidité pendant les étapes de production et lors de l'utilisation ultérieure de telles compositions luminescentes et pouvant être colorées.

### Expose de l'invention

Par « luminescence » l'on entend la propriété d'émettre de la lumière sous l'action de facteurs physiques tels que la réception de rayons ultraviolets ou autres. Plus particulièrement dans cette description, l'on entend par luminescence la photoluminescence, c'est-à-dire le rayonnement lumineux émis qui est dû à l'absorption de photons par des électrons.

Par « rémanence de la luminescence » l'on entend la persistance de la luminescence dans un milieu par faible luminosité.

Par « saturation du pigment luminescent » l'on entend que le pigment luminescent a absorbé une composition de saturation à l'intérieur des porosités ou micro-cavités du pigment luminescent de telle sorte que le pigment luminescent n'absorbera pas ou seulement de manière négligeable d'autres compositions consécutivement mélangées avec la composition comprenant le pigment luminescent. Il est également possible d'utiliser le terme de « mouillage » du pigment luminescent. Les micro-cavités des pigments luminescents correspondent à des fissures 511 ou des cavités 512 telles que visibles sur la figure 2. La taille de ces micro-cavités varie selon la taille du pigment luminescent. Les fissures peuvent être aussi longues que le pigment luminescent, voire même d'une longueur supérieure à celle du pigment luminescent si la fissure n'est par exemple pas de forme rectiligne. Les cavités sont généralement d'une taille sensiblement inférieure à la taille du pigment luminescent et peuvent être de l'ordre de seulement quelques microns à une centaine de microns, par exemple de 1 µm à 100 µm, ou encore de 1 µm à 20 µm.

Par « intensité de luminescence » l'on entend l'intensité de rémanence du pigment luminescent coloré, c'est-à-dire la capacité du pigment luminescent à rémaner ou ré-émettre dans une direction donnée. Cette grandeur est mesurée en millicandela.

Par « luminance » l'on entend l'intensité de luminescence d'une surface comprenant le pigment luminescent coloré, cette grandeur étant mesurée en candela/surface (millicandela/m²).

La méthode de préparation d'une composition luminescente saturée selon l'invention est définie dans les revendications. Elle comprend les étapes suivantes :
- une étape de saturation d'un pigment luminescent par une composition de saturation, la composition de saturation étant adaptée pour pénétrer dans les micro-cavités du pigment luminescent et permettant d'obtenir un pigment luminescent saturé,
- une étape de mélange du pigment luminescent saturé avec une composition vectrice permettant d'obtenir une composition luminescente saturée.

L'étape de saturation du pigment luminescent par une composition de saturation étant opérée à une température inférieure à 30°C et comprend les sous-étapes suivantes :
- une sous-étape de mélange du pigment luminescent et d'une composition de saturation adaptée pour pénétrer dans les micro-cavités du pigment luminescent, la composition de saturation ayant une viscosité inférieure à 2,2.10⁻³ Pa·s,
- une sous-étape de maintien au repos du mélange du pigment luminescent et d'une composition de saturation adaptée pour pénétrer dans les micro-cavités du pigment luminescent pendant au moins 1 heure, permettant d'obtenir un pigment luminescent saturé.

La composition de saturation est telle que définie à la revendication 1. L'homme du métier saura adapter la composition de saturation en fonction de la forme finale de la composition luminescente saturée souhaitée.

De préférence, la composition vectrice est transparente. Alternativement, la composition vectrice peut comprendre un colorant et permet d'obtenir une composition luminescente saturée et colorée. De manière alternative, la méthode comprend ultérieurement une étape de mélange de la composition luminescente saturée et d'une composition colorante permettant d'obtenir une composition luminescente saturée et colorée.

Avantageusement, la composition vectrice peut comprendre au moins un élément compris dans la liste suivante : eau, agent stabilisant, agent antimousse, colorant, carbonate de calcium, solvant coalescent, agent réducteur de tension de surface, baryte, talc, agent de conservation, résine acrylique, résine polyuréthane, résine époxy, résine synthétique poudreuse dans un plastifiant, résine fluorée, agent anti-rayure, épaississant acrylique, adoucisseur d'eau, quartz, épaississant végétal et cire. L'homme du métier saura adapter la composition vectrice en fonction de la forme finale de la composition luminescente saturée souhaitée.

De préférence, la sous-étape de mélange a une durée comprise entre 1 heure et 1 heure et 30 minutes.

De préférence, la sous-étape de maintien au repos dure entre 1 et 18 heures. L'homme du métier saura adapter la durée de la sous-étape de maintien au repos en fonction de la température à laquelle cette étape est effectuée et du volume de la composition de saturation qui doit être absorbée par le volume de pigment luminescent.

De préférence, la sous-étape de mélange comprend l'ajout dans un mélangeur de type pétrin de la composition de saturation dans laquelle est ajouté le pigment luminescent de telle sorte que l'ajout favorise la dispersion du pigment luminescent au sein de la composition de saturation.

De préférence, le mélangeur ne comprend pas d'hélices contendantes mais des bras ronds qui tournent à une vitesse de 30 à 60 tours par minute de telle sorte que les pigments luminescents ne soient pas cassés.

La composition de saturation comprend au moins une résine choisie parmi un groupe comprenant une résine acrylique, une résine époxy, une résine polyuréthane, une résine fluorée et une résine synthétique dans un plastifiant liquide.

La composition de saturation comprend de l'eau et un solvant coalescent, voire un agent antimousse et/ou un diluant PVC.

La composition de saturation peut comprendre au moins 55 % (pourcentage en poids) d'une résine acrylique et/ou polyuréthane et au moins 0,5 % d'eau ou de solvant. De préférence, pour la préparation d'une composition de saturation en phase aqueuse, la composition de saturation comprend au moins 55 % (pourcentage en poids) d'une résine acrylique et/ou polyuréthane et au moins 0,5 % d'eau. Encore plus préférentiellement pour la préparation d'une composition de saturation en phase aqueuse, la composition de saturation comprend :
- au moins 55 % (pourcentage en poids) d'une résine acrylique et/ou polyuréthane ; et
- au moins 1,5 % d'eau.
De préférence, pour la préparation d'une solution en phase solvantée, la composition de saturation comprend au moins 55 % (pourcentage en poids) d'une résine acrylique et/ou polyuréthane et au moins 0,5 % de solvant. Encore plus préfentiellement pour la préparation d'une composition de saturation en phase solvantée, la composition de saturation comprend au moins 55 % (pourcentage en poids) d'une résine acrylique et/ou polyuréthane et au moins 1,5 % de solvant.

Préférentiellement, la composition de saturation comprend entre 65 et 95 % d'une résine acrylique et/ou polyuréthane et entre 1,5 % et 30 % d'eau.

Encore plus préférentiellement, la composition de saturation comprend entre 70 et 90 % d'une résine acrylique et/ou polyuréthane et entre 15 et 30 % d'eau.

La composition de saturation comprend au moins 3,5 % (pourcentage en poids) de solvant coalescent.

Préférentiellement, la composition de saturation comprend entre 5 et 20 % de solvant coalescent.

Encore plus préférentiellement, la composition de saturation comprend 15 % de solvant coalescent.

De préférence, la composition luminescente saturée comprend de 10 à 25 % (pourcentage en poids) de pigment luminescent.

L'étape de saturation 100 du pigment luminescent est opérée à une température inférieure à 30°C.

Avantageusement, au moins une des étapes et/ou sous-étapes est(sont) effectuées dans un mélangeur sous vide.

La composition de saturation a une viscosité inférieure à 2,2.10⁻³ Pa·s. De préférence, la composition de saturation a une viscosité inférieure à 2.10⁻³ Pa·s, encore plus préférentiellement inférieure à 1,5.10⁻³ Pa·s.

Alternativement, la présente invention comprend une méthode de préparation d'une composition luminescente saturée et colorée, comprenant une méthode précédemment décrite de manière à obtenir une composition luminescente saturée et le mélange de ladite composition luminescente saturée avec une composition colorante.

La présente invention concerne également une composition luminescente saturée obtenue par une des méthodes précédemment décrites.

La présente invention concerne également une composition luminescente saturée et colorée obtenue par une des méthodes précédemment décrites.

Avantageusement, les pigments luminescents sont notamment choisis parmi :
- les sulfures, comme par exemple, CaS:Bi, CaSrS:Bi, ZnS:Cu, ZnS:Pb²⁺, ZnS:Mn²⁺, ZnCdS:Cu, AB₂S₄ (où A = métal alcalino-terreux ; B = aluminium), SrS:Cr, SrS dopé par des terres rares où Mn, CdS:Mn, Y₂O₂S:(Er,Yb), etc. ;
- les fluorures, comme par exemple, AF₃ (où A = La³⁺, Ce³⁺, Y³⁺) et AF₂ (Al³⁺, Mg²⁺, Ca2⁺, Pb²⁺) et contenant au moins un ion luminescent choisi dans le groupe comprenant les ions métalliques trivalents (Cr³⁺, Fe³⁺, etc.) ou les terres rares (Y³⁺, Pr³⁺, Nd³⁺, Sm³⁺, Eu³⁺, Tb³⁺, Dy³⁺, Ho³⁺, Er³⁺, Tm³⁺, Yb³⁺), etc. ;
- les oxydes luminescents comme par exemple, MAl₂O₄ (où M = un ou plusieurs métaux choisis parmi le calcium, strontium et baryum, l'oxyde pouvant être dopé par l'europium comme activateur de luminescence et pouvant éventuellement contenir d'autres activateurs comme par exemple le lanthane, le cérium, le praséodyme, le néodyme, le samarium, le gadolinium, le dysprosium, l'holmium, l'erbium, le thulium, l'ytterbium, le lutétium ou l'étain et le bismuth comme co-activateurs comme dans le SrAl₂O₄(Eu²⁺, Dy³⁺), etc. ;
- les verres de phosphate (dopé avec des terres rares), LiNbO₃ (dopé avec des terres rares), TiO₂ (dopé avec des terres rares), LaPO₄:Ce et/ou Tb, LaPO₄:Eu, CePO₄:Tb, etc. ;
- les nitrites de métaux alcalins ou alcalino-terreux.

De préférence, le pigment luminescent est choisi parmi une liste comprenant l'aluminate de strontium, l'aluminate de calcium, l'aluminate de strontium dopé avec des terres rares et l'aluminate de calcium dopé avec des terres rares, de préférence dopés à l'europium.

La composition luminescente saturée et colorée obtenue selon la méthode de la présente invention présente un agencement particulier du pigment luminescent et du colorant, de manière à ce que le colorant ne soit pas positionné dans les porosités ou micro-cavités du pigment luminescent, c'est-à-dire que le colorant ne se retrouve pas au cœur, à l'intérieur du pigment luminescent et ne lui est pas intimement lié, que ce soit lors de la préparation du pigment luminescent coloré selon la présente invention ou après celle-ci.

Avantageusement, la composition luminescente saturée et la composition luminescente saturée et colorée obtenues selon la méthode de préparation de la présente invention permettent leur concassage et leur réutilisation dans divers compositions. Le concassage ne désorganise pas l'agencement particulier entre le pigment luminescent et le colorant au sein de la composition luminescente saturée et colorée obtenue selon la méthode de préparation de la présente invention.

La composition luminescente saturée et la composition luminescente saturée et colorée obtenues selon la méthode de la présente invention sont particulièrement adaptées pour une transformation plastique ultérieure. En effet, les pigments luminescents compris dans la composition luminescente saturée obtenue par la méthode de la présente invention sont saturés à au moins 80 %, préférentiellement à au moins 90 %, encore plus préférentiellement à au moins 95 % avec la composition de saturation. Une telle saturation du pigment luminescent rend le pigment luminescent parfaitement exploitable dans un liant solvanté. En effet, de tels pigments luminescents saturés sont stables, assurent une cohésion mécanique sans reprise d'eau et sont homogènes pour tous les autres liants en phase aqueuse, solvant, vernis et résine. Dans le cas de la transformation plastique, la composition luminescente saturée obtenue par la méthode selon la présente invention est insensible au dégagement de vapeur produit par la montée en température en raison des porosités ou micro-cavités des pigments luminescents qui sont remplies par la composition de saturation. La transformation avec la composition luminescente saturée et colorée selon la présente invention ne génère pas non plus de blocs cristallisés inutilisables qui sont corrélés à une perte importante de pigments luminescents.

La composition de saturation selon la présente invention est adaptée pour pénétrer dans les micro-cavités du pigment luminescent en raison de sa viscosité. L'étape de saturation du pigment luminescent par la composition de saturation est particulièrement efficace pour que la composition de saturation pénètre dans les micro-cavités du pigment luminescent lors de la sous-étape de mélange et que la composition de saturation soit intimement liée dans ces micro-cavités lors de la sous-étape de maintien au repos. Une composition luminescente saturée selon la méthode de la présente invention comprend des pigments luminescents dont les micro-cavités sont remplies, saturées par la composition de saturation, empêchant l'absorption de tout autre élément dans les micro-cavités du pigment luminescent. La composition de saturation sera préférentiellement une solution liquide car dans le cas d'une composition pâteuse, celle-ci ne rentrerait pas dans le pigment luminescent. Il est nécessaire que la composition de saturation rentre dans les micro-cavités du pigment luminescent.

La composition luminescente saturée obtenue grâce aux méthodes de préparation de la présente invention améliorent de manière significative l'efficacité de la rémanence de luminescence comparativement aux compositions luminescentes colorées de l'état de l'art qui ne présentent pas de saturation du pigment luminescent avec une composition de saturation telle que décrite dans la présente invention. A quantité égale de pigments luminescents en épaisseur fine, la composition luminescente saturée et la composition luminescente saturée et colorée de la présente invention présentent une amélioration de la luminance, intensité lumineuse par unité de surface, d'au moins 30 à 50 % en comparaison avec les compositions luminescentes colorées de l'art antérieur.

La méthode de la présente invention permet l'utilisation de machines de production déjà connues et dont l'utilisation ne nécessite pas de compétences manuelles hautement spécialisées. Egalement, la méthode de la présente invention n'exige pas de conditionnement particulier qui diffère des méthodes antérieures de production de compositions luminescentes colorées.

Avantageusement, la composition luminescente saturée et la composition luminescente saturée et colorée selon la présente invention permettent une luminescence de masse avec communication entre les pigments luminescents. L'excitation des pigments luminescents de la composition luminescente saturée et colorée de la présente invention est plus rapide que celle des pigments luminescents des compositions luminescentes colorées de l'art antérieur et permet une restitution de la luminescence qui est plus forte et plus longue. De ce fait, dans une couche épaisse d'une composition luminescente saturée et colorée de la présente invention, la couche épaisse comprenant une couche superficielle et une couche profonde, la couche superficielle pourra être excitée par une lumière extérieure. La couche profonde, qui n'est pas atteinte par la lumière extérieure, qui est superficielle, pourra être excitée par la restitution de la luminescence par la couche superficielle lorsque l'environnement est de faible luminosité. A nouveau et en retour, la rémanence de la luminescence de la couche profonde va permettre, par ré-émission de luminescence, d'exciter la couche superficielle. La communication entre les pigments luminescents de la composition luminescente saturée et colorée obtenue par les méthodes de la présente invention permet d'obtenir un effet de réservoir de luminescence active de la composition luminescente colorée.

Avantageusement, la composition luminescente saturée et la composition luminescente saturée et colorée obtenues selon la méthode de la présente invention permettent des applications de surface dans de nombreux domaines. En particulier, elles peuvent être utilisées dans une peinture en phase aqueuse ou en phase solvant. Ces peintures peuvent être utilisées en intérieur ou bien en extérieur pour des applications telles que les peintures routières, le balisage et guidage de sécurité dans les tunnels, dans les intérieurs de bateaux et dans les sous-marins.

Egalement, la composition luminescente saturée et la composition luminescente saturée et colorée peuvent être comprises dans des vernis ou des lasures en phase aqueuse ou en phase solvant ou enfin en spray, ces utilisations étant particulièrement destinées pour du bois ou du béton, par exemple des trottoirs.

Pareillement, la composition luminescente colorée et la composition luminescente saturée et colorée peuvent être comprises dans une résine en phase aqueuse ou en phase solvant pour une utilisation sur des liners de piscine, des bassins, des pots ou bien des bandes pour pistes cyclables.

Tout autant, la composition luminescente saturée et la composition luminescente saturée et colorée peuvent être comprises dans un gel de revêtement en phase solvant pour enduire une coque de véhicule maritime ou des liners de piscine ou bassins. Elles peuvent être comprises dans des compositions pour des enductions de murs, façades, quais de métro, par exemple au niveau des plaques podotactiles, quais de trains, de bateaux et embarcadères.

Enfin, la composition luminescente saturée et la composition luminescente saturée et colorée peuvent être utilisées dans des phases aqueuses ou solvants pour enduire des textiles tels que des vêtements, en particulier des vêtements de sécurité qui sont luminescents et fluorescents, des voiles ou des bâches. Elles peuvent être utilisées dans des encres de sérigraphie pour la production de textile, de papier peint ou de vinyle, par exemple des adhésifs.

Particulièrement, la composition luminescente saturée et la composition luminescente saturée et colorée obtenues selon la méthode de la présente invention permettent des applications de masse dans de nombreux domaines. Elles peuvent être comprises dans la production de calandrage de Polychlorure de vinyle tel que les liners de piscine ou par extrusion ou injection pour des bâtiments, installations immobilières, rampes, rambardes, garde-corps ou signalisation de sécurité urbaine, marquages d'obstacles, trottoirs, ponts et marches.

La composition luminescente saturée et la composition luminescente saturée et colorée de l'invention peuvent être comprises dans des compositions pour produire par roto moulage des équipements maritimes tels que des bouées, des protections de quai de port ou du mobilier extérieur ou intérieur. Elles peuvent également être comprises dans des compositions pour la production de joints de carrelage ou de mastic.

L'homme du métier saura adapter la composition de saturation pour que la viscosité de la composition de saturation lui permette de pénétrer dans les micro-cavités des pigments luminescents. Egalement, l'homme du métier saura adapter la composition de saturation et la quantité d'eau en fonction de la viscosité du produit final désiré après l'étape de maintien au repos, cette viscosité étant dépendante de la granulométrie du pigment luminescent, de la composition de saturation, de la composition vectrice et du temps de maintien au repos. En effet, une granulométrie de pigments luminescents supérieure à 500 µm ne présente pas les mêmes capacités d'absorption de la composition de saturation que des pigments luminescents d'une granulométrie inférieure à 100 µm.

### Brève description des figures

D'autres caractéristiques et avantages de l'invention apparaîtront à l'aide de la description qui suit, donnée à titre illustratif et non limitatif, faite en regard de la figure et des exemples annexés.
[Fig.1] La figure 1 illustre les étapes et sous-étapes d'une méthode de préparation d'une composition luminescente saturée et colorée.
[Fig.2] La figure 2 est une photographie obtenue au microscope électronique à balayage d'un pigment luminescent seul après polissage mécanique.[Fig.3] La figure 3 est une photographie obtenue au microscope électronique à balayage d'un pigment luminescent seul.
[Fig.4] La figure 4 est une photographie obtenue au microscope électronique à balayage d'un pigment luminescent seul.
[Fig.5] La figure 5 est une photographie obtenue au microscope électronique à balayage d'un pigment luminescent seul après polissage mécanique.
[Fig.6] La figure 6 est une photographie obtenue au microscope électronique à balayage d'un pigment luminescent saturé.
[Fig.7] La figure 7 est une photographie obtenue au microscope électronique à balayage d'un pigment luminescent coloré.
[Fig.8] La figure 8 est une photographie obtenue au microscope électronique à balayage d'un pigment luminescent coloré après polissage mécanique.
[Fig.9] La figure 9 est une photographie obtenue au microscope électronique à balayage d'un pigment luminescent saturé et coloré.
[Fig.10] La figure 10 est une photographie obtenue au microscope électronique à balayage d'un pigment luminescent saturé et coloré après polissage mécanique.
[Fig.11] La figure 11 est une photographie obtenue au microscope électronique à balayage de la surface d'un pigment luminescent saturé et coloré.

### Description détaillée de l'invention

La figure 1 illustre les étapes et sous-étapes d'une méthode de préparation d'une composition luminescente et colorée selon la présente invention.

Premièrement, une étape de saturation 100 d'un pigment luminescent par une composition de saturation est effectuée, la composition de saturation étant adaptée pour pénétrer dans les micro-cavités du pigment luminescent.

L'étape de saturation 100 comprend d'abord une sous-étape de mélange 110 du pigment luminescent et de la composition de saturation. L'étape de saturation 100 comprend ensuite une sous-étape de maintien au repos 120 du mélange du pigment luminescent et d'une composition de saturation pendant au moins 1 heure du mélange du pigment luminescent et de la composition de saturation. L'étape de saturation 100 permet d'obtenir un pigment luminescent saturé.

Deuxièmement, une étape de mélange 200 du pigment luminescent saturé avec une composition vectrice permet d'obtenir une composition luminescente saturée.

Troisièmement, une étape ultérieure de mélange 300 de la composition luminescente saturée et d'une composition colorante permettant d'obtenir une composition luminescente saturée et colorée.

La figure 2 est une photographie obtenue au microscope électronique à balayage d'un pigment luminescent 510 seul après polissage mécanique. Le pigment luminescent 510 de la figure 2 est un aluminate de strontium. Le pigment luminescent 510 de la figure 2 n'a pas été mélangé avec une composition de saturation ou une composition comprenant des colorants. Le polissage mécanique permet d'identifier la structure interne du pigment luminescent. Le pigment luminescent 510 visible sur la figure 2 a une taille d'environ 120 µm et a une forme sensiblement ronde. Le pigment luminescent de la figure 2 a une forme tridimensionnelle sensiblement sphérique mais d'autres formes sont possibles. Des micro-cavités du pigment luminescent 510 sont visibles et correspondent à des fissures 511 et des cavités 512. Les fissures 511 visibles sur la figure 2 ont une taille d'environ 45 µm et 25 µm mais d'autres tailles et formes de fissures sont possibles. Les cavités 512 visibles sur la figure 2 ont une taille comprise entre 1 et 20 µm et ont des formes variées mais d'autres tailles et formes de cavités sont possibles.

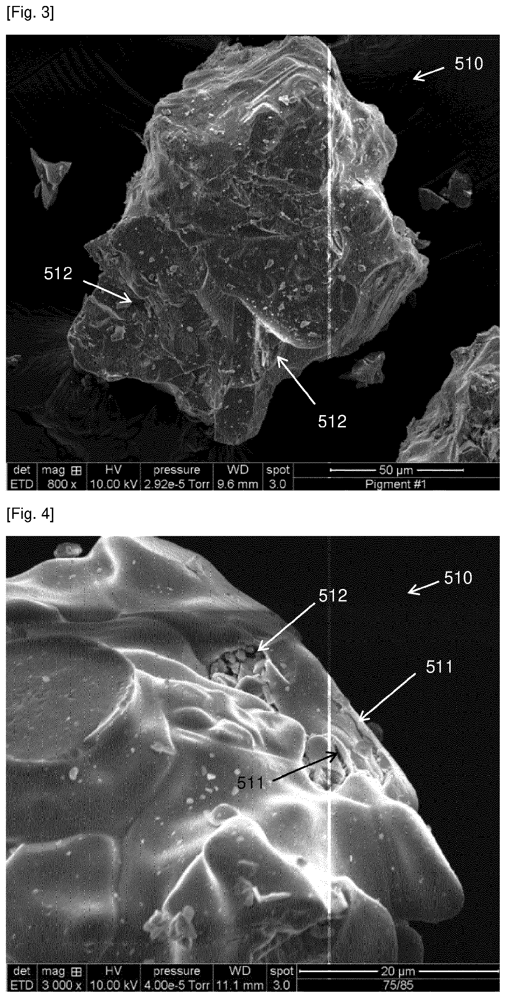

La figure 3 est une photographie obtenue au microscope électronique à balayage d'un pigment luminescent 510 seul. Le pigment luminescent 510 de la figure 3 est un aluminate de strontium. Le pigment luminescent 510 de la figure 3 n'a pas été mélangé avec une composition de saturation ou une composition comprenant des colorants. Le pigment luminescent 510 visible sur la figure 3 a une taille d'environ 150 µm et a une forme sensiblement ronde. Le pigment luminescent de la figure 3 a une forme tridimensionnelle sensiblement sphérique mais d'autres formes sont possibles. Des micro-cavités du pigment luminescent 510 sont visibles et correspondent à des cavités 512.

La figure 4 est une photographie obtenue au microscope électronique à balayage d'un pigment luminescent 510 seul. Le pigment luminescent 510 de la figure 4 est un aluminate de strontium. Le pigment luminescent 510 de la figure 4 n'a pas été mélangé avec une composition de saturation ou une composition comprenant des colorants. Bien que le pigment luminescent de la figure 4 ne soit pas entièrement visible, sa taille est d'environ 75 à 85 µm. Des micro-cavités du pigment luminescent 510 sont visibles et correspondent à des fissures 511 ou des cavités 512. Les cavités 512 et fissures 511 visibles du pigment luminescent de la figure 4 ont une taille à la surface du pigment de 5 à 7 µm. Cependant, il n'est pas possible de déterminer depuis la figure 4 la taille de ces cavités 512 et fissures 511 à l'intérieur du pigment luminescent de la figure 4.

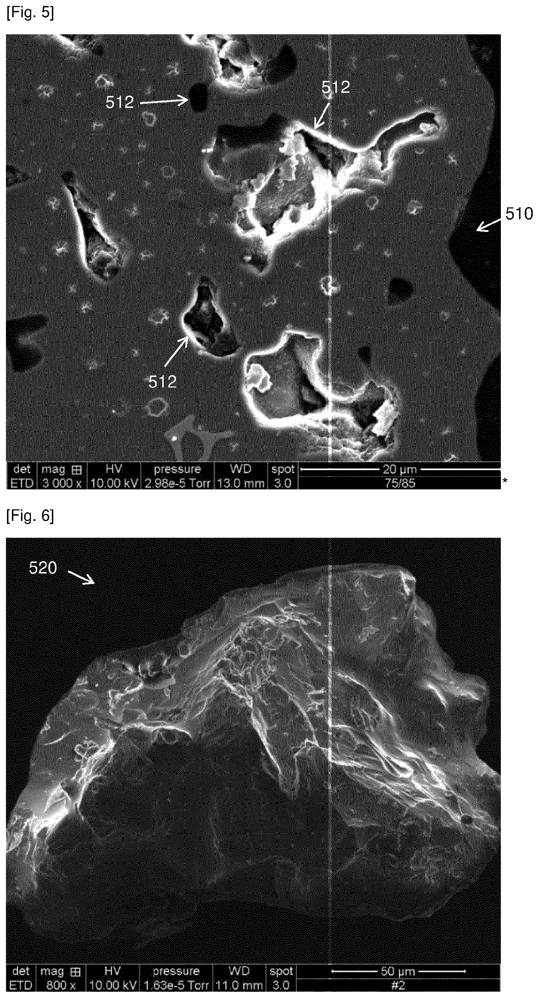

La figure 5 est une photographie obtenue au microscope électronique à balayage d'un pigment luminescent 510 seul après polissage mécanique. Le pigment luminescent 510 de la figure 5 est un aluminate de strontium. Le pigment luminescent 510 de la figure 5 n'a pas été mélangé avec une composition de saturation ou une composition comprenant des colorants. Bien que le pigment luminescent de la figure 5 ne soit pas entièrement visible, sa taille est d'environ 75 à 85 µm. Des micro-cavités du pigment luminescent 510 sont visibles et correspondent à des cavités 512. Les cavités 512 du pigment luminescent de la figure 5 ont une taille de 3 à 25 µm.

La figure 6 est une photographie obtenue au microscope électronique à balayage d'un pigment luminescent saturé 520. Le pigment luminescent saturé 520 de la figure 6 a été obtenu par mélange du pigment luminescent avec une composition de saturation étant un liant transparent et maintien au repos au moins 1 heure du mélange. Le pigment luminescent saturé 520 a une taille d'environ 200 µm. Le pigment luminescent saturé 520 de la figure 6 présente une surface sensiblement lisse et qui ne comprend pas de micro-cavités. En effet, les micro-cavités du pigment luminescent seul, étant des cavités ou des fissures, ont été saturées par le liant transparent qui, lors des étapes de mélange et de maintien au repos, a pénétré les micro-cavités du pigment luminescent. Le liant transparent a également recouvert le pigment luminescent.

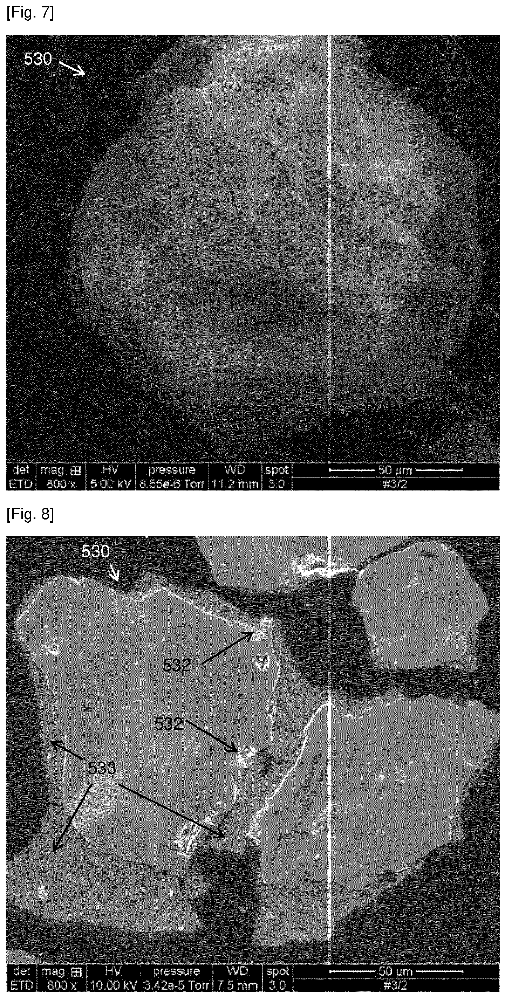

La figure 7 est une photographie obtenue au microscope électronique à balayage d'un pigment luminescent coloré 530. Le pigment luminescent coloré 530 de la figure 7 a été obtenu par mélange du pigment luminescent avec un colorant étant du dioxyde de titane. Le pigment luminescent coloré 530 a une taille d'environ 200 µm. Le pigment luminescent coloré 520 de la figure 7 présente une surface avec un aspect granulaire et qui ne comprend pas de micro-cavités. En effet, les micro-cavités du pigment luminescent seul, étant des cavités ou des fissures, ont été remplies par le colorant étant du dioxyde de titane. Lors de l'étape de mélange avec le colorant, le colorant a pénétré les micro-cavités du pigment luminescent et a recouvert la surface du pigment luminescent.

La figure 8 est une photographie obtenue au microscope électronique à balayage d'un pigment luminescent coloré 530 après polissage mécanique. Le pigment luminescent coloré 530 de la figure 8 a été obtenu par mélange du pigment luminescent avec un colorant étant du dioxyde de titane puis par polissage mécanique. Le pigment luminescent coloré 530 a une taille d'environ 80 µm. Le pigment luminescent coloré 530 de la figure 8 présente une couche externe 533 de colorant qui recouvre la totalité des surfaces du pigment luminescent. En particulier, cette couche externe 533 de colorant a pénétré les micro-cavités 532 du pigment luminescent. En effet, les micro-cavités du pigment luminescent, étant des cavités ou des fissures, ont été remplies par le colorant étant du dioxyde de titane. Lors de l'étape de mélange avec le colorant, le colorant a pénétré les micro-cavités du pigment luminescent et a recouvert la surface du pigment luminescent.

Certaines fissures du pigment luminescent apparaissent sur la figure 8 et ne sont pas remplies de colorant. Ces fissures peuvent correspondre à des fissures internes qui ne sont pas accessibles depuis la surface du pigment luminescent ou bien correspondent à des fissures qui se sont produites lors du polissage mécanique et qui n'ont donc pas pu être remplies par le colorant, le polissage mécanique ayant eu lieu après le mélange du pigment luminescent avec le colorant.

Il peut être déduit des figures 6, 7 et 8 que le mélange d'un pigment luminescent avec un liant transparent ou avec un colorant entraîne un remplissage des micro-cavités, fissures et cavités, par le liant transparent ou par le colorant. Cependant, lorsque le colorant pénètre dans les micro-cavités du pigment luminescent, cela a pour conséquence de rendre le pigment luminescent partiellement ou totalement opacifié, conduisant ainsi à une rémanence de luminescence de masse faible voire nulle.

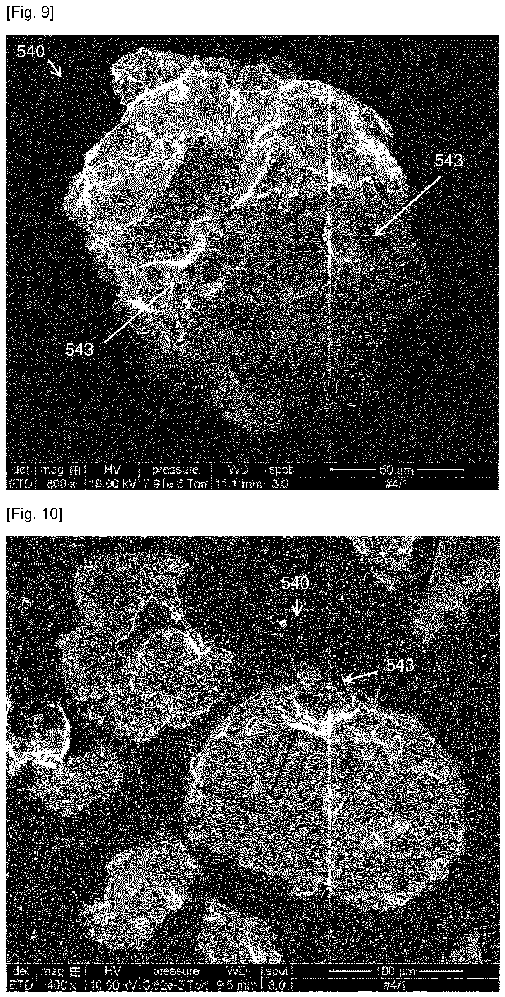

La figure 9 est une photographie obtenue au microscope électronique à balayage d'un pigment luminescent saturé et coloré 540. Le pigment luminescent saturé et coloré 540 de la figure 9 a été obtenu par mélange du pigment luminescent avec un liant transparent, maintien au repos de ce mélange pendant au moins une heure pour obtenir un pigment luminescent saturé, puis mélange du pigment luminescent saturé avec un colorant étant du dioxyde de titane. Le pigment luminescent saturé et coloré 540 a une taille d'environ 150 µm. Le pigment luminescent saturé et coloré 540 de la figure 9 ne présente pas de micro-cavités, des fissures et des cavités, sur sa surface externe. En revanche, le pigment luminescent saturé et coloré 540 présente une surface externe 543 de liant transparent sur laquelle certaines particules de colorant se sont fixées.

Il peut être particulièrement observé sur la photographie de la figure 9 que le pigment luminescent saturé et coloré ne présente pas d'aspect granulaire comme le pigment luminescent coloré de la figure 7. En particulier, cette couche externe 543 de liant transparent a été constituée par la pénétration du liant transparent dans les micro-cavités du pigment luminescent, ce qui a empêché la pénétration du colorant dans les micro-cavités. Egalement, le pigment luminescent, en raison de la présence du liant transparent, n'a pas absorbé le colorant de manière uniforme sur sa surface et n'a pas pour conséquence une opacification partielle ou totale du pigment luminescent telle que celle obtenue pour le pigment luminescent coloré de la figure 7.

La figure 10 est une photographie obtenue au microscope électronique à balayage d'un pigment luminescent saturé et coloré 540 après polissage mécanique. Le pigment luminescent saturé et coloré 540 de la figure 10 a été obtenu de la même manière que celui de la figure 9 et a ensuite été poli mécaniquement. Le pigment luminescent saturé et coloré 540 de la figure 10 a une taille d'environ 200 µm. Le pigment luminescent saturé et coloré 540 de la figure 10 présente grâce au polissage mécanique des micro-cavités, fissures 541 et cavités 542, remplies de liant transparent et une surface externe 543 de liant transparent sur laquelle des particules de colorant se sont fixées.

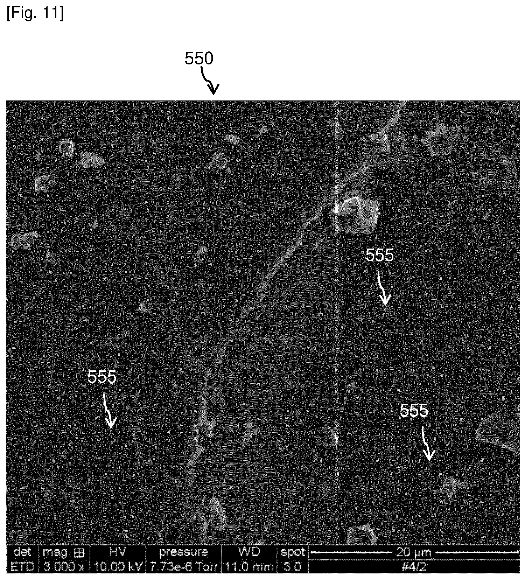

La figure 11 est une photographie obtenue au microscope électronique à balayage de la surface 550 d'un pigment luminescent saturé et coloré obtenu de la même manière que celui de la figure 9. On peut observer des particules de colorant 555, seulement trois sont indiquées sur la figure mais ces particules sont présentes d'une manière uniforme sur la surface du pigment luminescent saturé. Il peut être particulièrement observé sur la figure 11 que le pigment luminescent ne présente pas de micro-cavités, fissures ou cavités, qui sont remplies par des particules de colorant comme cela peut être observé sur la figure 8.

### Exemples A - Saturation de pigments luminescents pour la préparation de produits liquide en phase aqueuse ou solvantée liquide

Une étape de saturation du pigment luminescent par une composition de saturation est effectuée. Celle-ci comprend une première sous-étape de mélange par dispersion des pigments luminescents dans une composition de saturation transparente pendant 1h à 1h30 puis une sous-étape de maintien au repos pendant 18h, permettant d'obtenir un pigment luminescent saturé. Le pigment luminescent est un aluminate de strontium dopé à l'europium.

Le pigment luminescent saturé est introduit dans une composition vectrice et mélangée quelques minutes pour obtenir une composition luminescente saturée.

La composition luminescente saturée est ensuite mélangée dans une composition colorante dont le poids est de 1 à 20 % de la composition luminescente saturée.

Dans ces exemples A1 à A4, la granulométrie des pigments luminescents est de 10 à 120 µm.

Exemples de familles phase aqueuse réalisables selon l'exemple A : peinture décorative, peinture routière, résine de sol, joint de carrelage, mastic acrylique, enduit décoratif, peinture de façade.

### Exemples de familles en phase solvantée selon l'exemple A : résine époxy (polyester/PU/PMMA pour application de surface ou de masse en coulée)

### Exemple A1 - Peinture décorative

**[Table 1] Composition de saturation**

| | % |
|---|---|
| Eau | 80 |
| Agent tensio-actif | 15 |
| Résine acrylique | 5 |

Le pigment luminescent est mélangé à la composition de saturation à hauteur de 15 % (pourcentage en poids) de la composition de saturation puis l'ensemble est maintenu au repos. Un pigment luminescent saturé est obtenu et celui-ci est mélangé à la composition vectrice suivante :

**[Table 2] Composition vectrice**

| | % |
|---|---|
| Eau | 41 |
| Agent tensio-actif | 9 |
| Agent antimousse | 0,2 |
| Agent conservateur | 0,1 |
| Talc | 11,7 |
| Résine acrylique | 35 |
| Résine polyuréthane | 3 |

### Exemple A2 - Peinture routière

**[Table 3] Composition de saturation**

| | % |
|---|---|
| Eau | 25 |
| Résine acrylique | 60 |
| Solvant coalescent | 15 |

Le pigment luminescent est mélangé à la composition de saturation à hauteur de 15 % (pourcentage en poids) de la composition de saturation puis l'ensemble est maintenu au repos. Un pigment luminescent saturé est obtenu et celui-ci est mélangé à la composition vectrice suivante :

**[Table 4] Composition vectrice**

| | % |
|---|---|
| Eau | 6,4 |
| Agent stabilisant | 1,8 |
| Agent antimousse | 0,7 |
| Agent colorant | 17,5 |
| Résine acrylique | 35,5 |
| Carbonate de calcium | 32,8 |
| Solvant coalescent | 5,3 |

### Exemple A3 - Résine de sol

**[Table 5] Composition de saturation**

| | % |
|---|---|
| Eau | 19 |
| Résine acrylique | 66 |
| Solvant coalescent | 15 |

Le pigment luminescent est mélangé à la composition de saturation à hauteur de 20 % (pourcentage en poids) de la composition de saturation puis l'ensemble est maintenu au repos. Un pigment luminescent saturé est obtenu et celui-ci est mélangé à la composition vectrice suivante :

**[Table 6] Composition vectrice**

| | % |
|---|---|
| Eau | 8,5 |
| Agent stabilisant | 15 |
| Agent tensio-actif | 0,5 |
| Agent régulateur de pH | 0,25 |
| Colorant | 25 |
| Barite | 10 |
| Agent de conservation | 0,25 |
| Résine acrylique | 48,1 |
| Solvant coalescent | 4,9 |
| Agent antimousse | 0,25 |
| Epaississant polyuréthane | 0,25 |
| Agent anti-rayure | 0,1 |
| Epaississant acrylique | 0,4 |

### Exemple A4 - Joint de carrelage

[Table 7] Composition de saturation

| | % |
|---|---|
| Eau | 18 |
| Résine polyuréthane | 60 |
| Résine acrylique | 12 |

Le pigment luminescent est mélangé à la composition de saturation à hauteur de 20 % (pourcentage en poids) de la composition de saturation puis l'ensemble est maintenu au repos. Un pigment luminescent saturé est obtenu et celui-ci est mélangé à la composition vectrice suivante :

**[Table 8] Composition vectrice**

| | % |
|---|---|
| Résine de polyuréthane | 40 |
| Résine acrylique | 10 |
| Agent adoucisseur d'eau | 0,5 |
| Colorant | 3 |
| Carbonate de Calcium | 30 |
| Talc | 3 |
| Titanium Dioxide | 9,2 |
| Agent antimousse | 0,5 |
| Agent de conservation | 0,2 |
| Eau | 3,6 |

Le carbonate de calcium permet d'améliorer la résistance mécanique de la composition luminescente saturée et colorée.

### Exemples B - Saturation de pigments luminescents pour la préparation de produits destinés aux technologies industrielles à chaud (injection/extrusion)

Une étape de saturation du pigment luminescent par une composition de saturation est effectuée. Celle-ci comprend une première sous-étape de mélange par dispersion des pigments luminescents dans une composition de plastique micronisé transparent préalablement diluée avec au moins un solvant dédié (PS, PSC, PVC, PET, etc.) pendant 1h à 1h30 puis une sous-étape de maintien au repos pendant 12h, permettant d'obtenir un pigment luminescent saturé. Le pigment luminescent est un aluminate de strontium dopé à l'europium

Le solvant utilisé correspond à un solvant à base de styrène, distyrène ou d'acétone.

Le pigment luminescent saturé est mélangé à une température de 20 à 30°C jusqu'à l'évaporation du solvant résiduel. Le pigment luminescent saturé apparaît sous forme de poudre luminescente saturée par une matrice plastique.

La transformation plastique industrielle est opérée par introduction du pigment luminescent par pondéral de 10 à 40% dans la presse ou l'extrudeuse.

Dans cet exemple, la granulométrie des pigments luminescents est de 10 à 1000 µm, 300 à 1000 µm étant préféré, 500 à 1000 µm étant encore plus préféré, 800 à 1000 µm étant la granulométrie préférée.

### Exemples C - Comparaison de rémanence de compositions luminescentes préparées selon l'état de l'art et selon la méthode de la présente invention

Deux compositions luminescentes sont préparées. La composition luminescente A est préparée selon les méthodes de l'art avec une composition comprenant un liant transparent dans laquelle est dispersé un colorant puis sont dispersés des pigments luminescents et enfin est ajouté d'un durcisseur. La composition B est préparée selon la méthode de l'invention avec le mélange préalable du pigment luminescent avec une composition de saturation étant un liant transparent avec son solvant puis le maintien au repos du mélange pendant 12 heures pour obtenir une composition luminescente saturée puis le mélange de celle-ci avec une composition comprenant un colorant et un durcisseur.

Le liant transparent utilisé est une encre époxy Dubuit 8500 à base solvant (1,5 % de solvant, 85 % d'encre) transparente avec un agent de réticulation (durcisseur). Le liant transparent utilisé dans ce cas est particulièrement résistant à l'abrasion. D'autres liants transparents peuvent être utilisés pour des applications qui n'ont pas un besoin particulier de résistance à l'abrasion. Le colorant utilisé est une pâte colorante blanche comprenant du dioxyde de titane avec un taux de 8% dans le produit final appliqué. Le pigment luminescent utilisé est un aluminate de strontium dopé à l'europium dont la granulométrie est comprise entre 20 et 75 µm.

Les compositions sont appliquées sur des supports PVC blanc de 3 mm d'épaisseur, de format 250*120 mm par impression sérigraphique par deux passages avec séchage intermédiaire, un premier passage avec une granulométrie de pigment luminescent de 35 à 75 µm et un second passage avec une granulométrie de pigment luminescent de 20 à 30 µm. Un cadre avec écran à maille de 40 fils/cm² d'ouverture et films capillaires 200 µm.

Après séchage des échantillons A et B, ceux-ci sont mis dans le noir total pendant 48 heures afin d'effectuer des mesures en millicandela/m².

Des mesures de luminance sont effectuées de deux manières : une première série de mesures est faite après les 48 heures de mise dans le noir avec une exposition des échantillons à une lampe Xénon de 1000 lux, 150 watts pendant 5 minutes et une mesure de luminance selon la norme DIN 67510 par luminance mètre calibré. Une seconde série de mesures est faite après les 48 heures de mise dans le noir avec une exposition des échantillons à une lampe OSRAM blanc clair L35/21-840 de 15 lux pendant 5 minutes et une mesure de luminance selon la norme DIN 67510 par luminance mètre calibré.

**[Table 9]**

| | Echantillon A (mcd/m²) | | | Echantillon B (mcd/m²) | | |
|---|---|---|---|---|---|---|
| | 3 mn | 10 mn | 60 mn | 3 mn | 10 mn | 60 mn |
| Série 1 1000 lux pendant 5 minutes | 98.8 | 28.6 | 3.9 | 1335 | 407.8 | 53.7 |
| Série 2 15 lux pendant 5 minutes | 4.26 | 1.61 | 0.25 | 9.12 | 5.59 | 1.46 |

Les pigments luminescents de l'échantillon A sont opacifiés par le colorant blanc dont les micro-cavités sont remplies par le colorant. Seule une rémanence de surface est constatée.

Les pigments luminescents de l'échantillon B sont saturés en liant transparent et les pigments luminescents peuvent émettre entre eux. Le colorant est enrobé autour du pigment luminescent. Une rémanence de masse est ainsi constatée.

Les résultats de la série de mesures 1 permettent de constater une luminance plus de 10 fois plus importante pour la composition saturée et colorée selon la présente invention par rapport à la luminance des compositions préparées selon les méthodes de l'art. La rémanence de la composition correspondant à l'échantillon est donc bien supérieure à la rémanence de la composition correspondant à l'échantillon A.

Les résultats de la série de mesures 2 correspondent à une situation extrême pour effectuer des mesures de luminance des échantillons et permet de confirmer l'intérêt de la composition de l'échantillon B préparée selon la méthode de l'invention. En effet, les résultats démontrent que l'échantillon A présente des luminances qui diminuent jusqu'à être inférieures au seuil de visibilité au bout de 60 minutes, correspondant à une valeur de 0,3 mcd/m². Au contraire, l'échantillon B présente des résultats de luminance démontrant la visibilité dans le noir de la composition même après 60 minutes.

Les résultats de la série de mesures 2 permettent de constater une luminance plus de 5 fois plus importante pour la composition saturée et colorée selon la présente invention par rapport à la luminance des compositions préparées selon les méthodes de l'art. La rémanence de la composition correspondant à l'échantillon est donc bien supérieure à la rémanence de la composition correspondant à l'échantillon A, même dans des situations extrêmes.

En particulier, une telle composition obtenue selon la méthode de la présente invention est particulièrement intéressante pour l'application dans des milieux de faible luminosité voire où la luminosité est nulle. Par exemple, une telle composition peut être utilisée dans les tunnels ferroviaires, les métros et autres souterrains. Egalement, une telle composition peut être utilisée dans les sous-marins.

La composition obtenue selon la méthode de la présente invention a également l'avantage de pouvoir présenter des combinaisons de colorations de jour et de nuit qui ne sont pas possibles avec les méthodes de l'art. Par exemple les compositions de l'invention peuvent ne pas présenter de couleur de jour (translucide) et une couleur de nuit. Egalement, les compositions de l'invention peuvent présenter une première couleur de jour et une seconde couleur, différente de la première, la nuit. En effet, la lumière traverse le colorant pour exciter le cœur du pigment et renvoie une rémanence passant par le colorant en modifiant la couleur d'origine du pigment de nuit. Les combinaisons de couleur respectent la synthèse additive des couleurs. Des exemples de combinaisons de couleurs entre le colorant et le pigment luminescent de nuit sont présentés de manière non exhaustive ci-dessous.

**[Table 10]**

| Couleur de jour | Pigment Luminescent de nuit | Couleur restituée de nuit en rémanence |
|---|---|---|
| Violet | Jaune | Blanc crème |
| Rose | Bleu vert | Blanc froid |
| Rose | Bleu | Rose violet |
| Blanc | Bleu | Bleu clair |
| Orange | Jaune | Orange jaune |
| Vert | Jaune | Vert clair |
| Jaune | Jaune | Jaune |

### Exemples D - Comparaison de rémanence de compositions luminescentes

6 échantillons comprenant des pigments luminescents étant des aluminates de strontium d'environ 300 µm sont testés avec une décharge préalable de 48 heures dans le noir complet. Les échantillons 1 à 6 correspondent à des supports de 40*40*8 mm sur lesquels sont appliqués des pigments luminescents seuls ou des compositions comprenant des pigments luminescents.

L'échantillon 1 correspond à un pigment luminescent seul sans traitement préalable. L'échantillon 2 correspond à une composition comprenant un pigment luminescent saturé avec un liant transparent et correspond à une composition obtenue selon la méthode de l'invention. L'échantillon 3 correspond à une composition comprenant un pigment luminescent coloré avec un colorant blanc à un taux habituel de 25 %. L'échantillon 4 correspond à une composition comprenant un pigment luminescent coloré avec un colorant blanc à un taux 30 % inférieur au taux habituel. L'échantillon 5 correspond à une composition comprenant un pigment luminescent saturé avec un liant transparent et coloré avec un colorant blanc à un taux habituel de 25 % et correspond à une composition obtenue selon la méthode de l'invention. L'échantillon 6 correspond à une composition comprenant un pigment luminescent saturé et coloré avec un colorant blanc à un taux 30 % inférieur au taux habituel et correspond à une composition obtenue selon la méthode de l'invention.

Après la décharge préalable de 48 heures dans le noir complet, les échantillons 1 à 6 sont éclairés par une LED D65 de 1000 lux pendant 5 minutes. Une caméra de vidéo-luminancemètrie Lumetrix Westboro Photonics et un enregistreur NITC01 à une fréquence d'une mesure par minute sont utilisés. Les résultats sont indiqués dans la table 11.

**[Table 11]**

| Référence produit | Echantillo n 1 | Echantillo n 2 | Echantillo n 3 | Echantillo n 4 | Echantillo n 5 | Echantillo n 6 |
|---|---|---|---|---|---|---|
| Mesures à 3 minutes (mcd/m²) | 1875 | 1220 | 108 | 605 | 732 | 886 |
| Mesures à 5 minutes (mcd/m²) | 1289 | 841 | 75 | 386 | 499 | 610 |
| Mesures à 10 minutes (mcd/m²) | 719 | 488 | 43 | 190 | 286 | 362 |
| Mesures à 30 minutes (mcd/m²) | 245 | 174 | 16 | 63 | 104 | 127 |
| Mesures à 60 minutes (mcd/m²) | 111 | 82 | 7 | 30 | 49 | 63 |
| Classificatio n à 60 minutes NFX 08 | D | D | B | C | D | D |
| Durée de rémanence extrapolée pour 0.3 mcd/m² (+/-10%) | 137h | 103h | 9h | 46h | 72h | 93h |

Les résultats démontrent que les compositions luminescentes obtenues selon les méthodes de l'invention présentent des rémanences supérieures à des compositions luminescentes obtenues selon les méthodes de l'art antérieur. En effet, l'échantillon 3 représente les compositions luminescentes colorées principales selon les méthodes de l'art antérieur. L'échantillon 5 correspond à une composition luminescente obtenue par la méthode de la présente invention qui présente des rémanences environ 7 fois supérieures aux rémanences de l'échantillon 3. De manière encore plus importante, l'échantillon 6 correspond à une composition luminescente obtenue par la méthode de la présente invention et qui présente des rémanences près de 10 fois supérieures aux rémanences de l'échantillon 3. Egalement, les durées de rémanence des échantillons 5 et 6 sont respectivement 8 et 10 fois supérieures à la durée de rémanence de l'échantillon 3 pour 0,3 mcd/m².

Pour rappel, la classification type NF X 08-050 - 1 - Partie 1 est indiquée dans la table 12 ci-dessous.

**[Table 12]**

| Luminance minimale restituée mcd/m² | | |
|---|---|---|
| Classe | 10 min | 60 min |
| A | 23 | 3 |
| B | 30 | 7 |
| C | 140 | 20 |
| D | 260 | 35 |

Les différents modes présentés peuvent être combinés entre eux.

En outre, la présente invention n'est pas limitée aux modes de réalisation précédemment décrits mais s'étend à tout mode de réalisation entrant dans la portée des revendications.

## Revendications

1. Méthode de préparation d'une composition luminescente saturée, la méthode comprenant les étapes suivantes :
- une étape de saturation (100) d'un pigment luminescent par une composition de saturation, la composition de saturation étant adaptée pour pénétrer dans les micro-cavités du pigment luminescent et permettant d'obtenir un pigment luminescent saturé, l'étape de saturation (100) étant opérée à une température inférieure à 30°C et comprenant les sous-étapes suivantes :
une sous-étape de mélange (110) du pigment luminescent et d'une composition de saturation adaptée pour pénétrer dans les micro-cavités du pigment luminescent, la composition de saturation ayant une viscosité inférieure à 2,2.10⁻³ Pa·s,
une sous-étape de maintien au repos (120) du mélange du pigment luminescent et d'une composition de saturation adaptée pour pénétrer dans les micro-cavités du pigment luminescent pendant au moins 1 heure, permettant d'obtenir un pigment luminescent saturé ;
- une étape de mélange (200) du pigment luminescent saturé avec une composition vectrice permettant d'obtenir une composition luminescente saturée ;
la composition de saturation comprenant :
(1) au moins une résine choisie parmi un groupe comprenant une résine acrylique, une résine époxy, une résine polyuréthane, une résine fluorée et une résine synthétique dans un plastifiant liquide, dont au moins 55 % (pourcentage en poids de la composition de saturation) d'une résine acrylique et/ou polyuréthane, et
(2) au moins 0,5% (pourcentage en poids) d'eau ou de solvant, et
(3) au moins 3,5 % (pourcentage en poids) de solvant coalescent,
la composition vectrice comprenant au moins un élément compris dans la liste suivante : eau, agent stabilisant, agent antimousse, colorant, carbonate de calcium, solvant coalescent, agent réducteur de tension de surface, baryte, talc, agent de conservation, résine acrylique, résine polyuréthane, résine époxy, résine synthétique poudreuse dans un plastifiant, résine fluorée, agent anti-rayure, épaississant acrylique, adoucisseur d'eau, quartz, épaississant végétal et cire,
le pigment luminescent étant sélectionné parmi une liste comprenant les sulfures, les oxydes luminescents et les nitrites de métaux alcalins ou alcalino-terreux,
la composition luminescente saturée ou saturée et colorée comprenant de 10 à 25 % (pourcentage en poids) de pigment luminescent.

2. Méthode selon la revendication 1, le pigment luminescent étant sélectionné parmi une liste comprenant l'aluminate de strontium, l'aluminate de calcium, l'aluminate de strontium dopé avec des terres rares et l'aluminate de calcium dopé avec des terres rares.

3. Méthode selon l'une des revendications précédentes, au moins une des étapes et/ou sous-étapes étant effectuées dans un mélangeur sous vide.

4. Méthode de préparation d'une composition luminescente saturée et colorée, comprenant :
- la méthode selon l'une des revendications 1 à 3, de manière à obtenir une composition luminescente saturée ;
- le mélange de ladite composition luminescente saturée avec une composition colorante.

5. Composition luminescente saturée obtenue par une méthode selon l'une des revendications 1 à 3.

6. Composition luminescente saturée et colorée obtenue par une méthode selon la revendication 4.

## Patentansprüche

1. Verfahren zur Herstellung einer gesättigten lumineszierenden Zusammensetzung, wobei das Verfahren die folgenden Schritte umfasst:
- einen Sättigungsschritt (100) eines lumineszierenden Pigments mit einer Sättigungszusammensetzung, wobei die Sättigungszusammensetzung dazu ausgelegt ist, in die Mikrohohlräume des lumineszierenden Pigments einzudringen und ein gesättigtes lumineszierendes Pigment zu liefern, wobei der Sättigungsschritt (100) bei einer Temperatur von unter 30°C durchgeführt wird und die folgenden Unterschritte umfasst:
einen Unterschritt des Mischens (110) des lumineszierenden Pigments und einer Sättigungszusammensetzung, die dazu ausgelegt ist, in die Mikrohohlräume des lumineszierenden Pigments einzudringen, wobei die Sättigungszusammensetzung eine Viskosität von unter 2,2.10⁻³ Pa·s aufweist,
einen Unterschritt des Ruhenlassens (120) der Mischung aus dem lumineszierenden Pigment und einer Sättigungszusammensetzung, die dazu ausgelegt ist, in die Mikrohohlräume des lumineszierenden Pigments einzudringen, für mindestens 1 Stunde, um ein gesättigtes lumineszierendes Pigment zu erhalten;
- einen Mischschritt (200) des gesättigten lumineszierenden Pigments mit einer Trägerzusammensetzung, um eine gesättigte lumineszierende Zusammensetzung zu erhalten;
wobei die Sättigungszusammensetzung umfasst:
(1) mindestens ein Harz, ausgewählt aus der Gruppe bestehend aus einem Acrylharz, einem Epoxidharz, einem Polyurethanharz, einem Fluorharz und einem synthetischen Harz in einem flüssigen Weichmacher, davon mindestens 55 % nach Gewicht (der Sättigungszusammensetzung) eines Acrylharzes und/oder Polyurethanharzes, und
(2) mindestens 0,5 % nach Gewicht Wasser oder Lösemittel, und
(3) mindestens 3,5 % nach Gewicht Vernetzungslösemittel,
wobei die Trägerzusammensetzung mindestens einen Bestandteil aus der folgenden Liste umfasst: Wasser, Stabilisator, Entschäumer, Farbmittel, Calciumcarbonat, Vernetzungslösemittel, Netzmittel, Baryt, Talkum, Konservierungsmittel, Acrylharz, Polyurethanharz, Epoxidharz, pulverförmiges synthetisches Harz in einem Weichmacher, Fluorharz, Kratzschutzmittel, Acryldickungsmittel, Wasserenthärter, Quarz, pflanzliches Verdickungsmittel und Wachs,
wobei das lumineszierende Pigment aus einer Liste ausgewählt ist, die Sulfide, lumineszierende Oxide und Nitride von Alkali- oder Erdalkalimetallen umfasst,
wobei die gesättigte oder gesättigte und eingefärbte lumineszierende Zusammensetzung 10 bis 25 % nach Gewicht lumineszierendes Pigment umfasst.

2. Verfahren nach Anspruch 1, wobei das lumineszierende Pigment aus einer Liste ausgewählt ist, die Strontiumaluminat, Calciumaluminat, mit Seltenen Erden dotiertes Strontiumaluminat und mit Seltenen Erden dotiertes Calciumaluminat umfasst.

3. Verfahren nach einem der vorangehenden Ansprüche, wobei mindestens einer der Schritte und/oder Unterschritte in einem Vakuummischer durchgeführt wird.

4. Verfahren zur Herstellung einer gesättigten und eingefärbten lumineszierenden Zusammensetzung, umfassend:
- Verfahren nach einem der Ansprüche 1 bis 3, um eine gesättigte lumineszierende Zusammensetzung zu erhalten;
- Mischen der gesättigten lumineszierenden Zusammensetzung mit einer Färbezusammensetzung.

5. Gesättigte lumineszierende Zusammensetzung, erhältlich durch ein Verfahren nach einem der Ansprüche 1 bis 3.

6. Gesättigte und eingefärbte lumineszierende Zusammensetzung, erhältlich durch ein Verfahren nach Anspruch 4.

## Claims

1. Method for preparing a saturated luminescent composition, the method comprising the following steps:
- a saturation step (100) of a luminescent pigment by means of a saturation composition, the saturation composition being adapted to penetrate into the micro-cavities of the luminescent pigment and allowing to obtain a saturated luminescent pigment, the saturation step (100) being carried out at a temperature of less than 30 °C and comprising the following sub-steps:
a sub-step of a mixture (110) of the luminescent pigment and a saturation composition adapted to penetrate into the micro-cavities of the luminescent pigment, the saturation composition having a viscosity of less than 2.2.10⁻³ Pa·s,
a sub-step of maintaining in a state of rest (120) the luminescent pigment mixture and the saturation composition adapted to penetrate into the micro-cavities of the luminescent pigment for at least one hour, allowing to obtain a saturated luminescent pigment;
- a mixing step (200) of the saturated luminescent pigment with a vector composition allowing to obtain a saturated luminescent composition;
the saturation composition comprising:
(1) at least one resin selected among a group comprising an acrylic resin, an epoxy resin, a polyurethane resin, a fluorinated resin, and a synthetic resin in a liquid plasticizer, at least 55% (percentage by weight of the saturation composition) of which is an acrylic and/or polyurethane resin, and
(2) at least 0.5% (percentage by weight) of water or solvent, and
(3) at least 3.5% (percentage by weight) of coalescing solvent,
the vector composition comprising at least one element from the following list: water, stabilizing agent, anti-foaming agent, dye, calcium carbonate, coalescing solvent, surfactant, baryte, talc, preservative agent, acrylic resin, polyurethane resin, epoxy resin, synthetic resin powder in a plasticizer, fluorinated resin, anti-scratch agent, acrylic thickener, water softener, quartz, natural thickener and wax,
the luminescent pigment being selected from among a list comprising sulfurs, alkali ou alkaline-earth metal luminescent oxides and nitrates,
the saturated or saturated and dyed luminescent composition comprising between 10 and 25% (percentage by weight) of luminescent pigment.

2. The method according to claim 1, the luminescent pigment being selected from a list comprising strontium aluminate, calcium aluminate, rare earth-doped strontium aluminate and rare earth-doped calcium aluminate.

3. The method according to one of the preceding claims, at least one of the steps and/or sub-steps being carried out in a vacuum mixer.

4. Method for preparing a saturated, dyed luminescent composition, the method comprising the following steps:
- the method according to one of the claims 1 to 3, so as to obtain a saturated luminescent composition;
- the mixture of said saturated luminescent composition with a coloring composition.

5. A saturated luminescent composition obtained by a method according to one of claims 1 to 3.

6. A saturated and dyed luminescent composition obtained by a method according to claim 4.
